# EUROPEAN PATENT SPECIFICATION

(11) **EP 2 990 436 B1**
(45) Date of publication and mention of the grant of the patent: **01.08.2018**
(21) Application number: 15181247.6
(22) Date of filing: 17.08.2015
(51) Int. Cl.: C08K 3/04, C08K 3/06, C08K 3/36, C08K 9/06

(54) **RUBBER COMPOSITION PREPARED WITH PRE-TREATED SILICA AND TIRE**
KAUTSCHUKZUSAMMENSETZUNG, HERGESTELLT MITTELS VORBEHANDELTER KIESELSÄURE UND REIFEN
COMPOSITION DE CAOUTCHOUC PRÉPARÉE AVEC DE LA SILICE PRÉTRAITÉE ET PNEU

(30) Priority: 25.08.2014 US 201462041179 P
(43) Date of publication of application: 02.03.2016
(73) Proprietor: The Goodyear Tire & Rubber Company, Akron, Ohio 44316 (US)
(72) Inventor: FRANCIK, William Paul, Bath, OH Ohio 44333 (US); VERTHE, John Joseph Andre, Kent, OH Ohio 44240 (US)
(74) Representative: Kutsch, Bernd

(56) References cited:
- EP-A1- 2 554 553
- CN-A- 103 289 143

## Description

### Field of the Invention

The invention relates to a rubber composition prepared with pre-treated silica, preferably precipitated silica, and a tire with component comprising such rubber composition. The rubber composition comprises at least one diene-based elastomer and said pre-treated silica together with a sulfur cure package comprising elemental sulfur together with 1,6-bis (N,N'-dibenzylthiocarbamyldithio)-hexane crosslinking agent and sulfenamide accelerator.

### Background of the Invention

Rubber compositions for components of tires often comprise diene-based elastomers which contain filler reinforcement composed of a combination of rubber reinforcing carbon black and precipitated silica. Such precipitated silica is an amorphous synthetic silica which contains hydroxyl groups on its surface.

The precipitated silica with its included hydroxyl groups is hydrophilic in nature and the presence of the included hydroxyl groups causes it to be significantly more polar than less polar diene-based elastomers contained in the rubber composition. The high polarity of the hydrophilic precipitated silica particles causes the silica particles to be more attractive to other hydrophilic precipitated silica particles (causes a high silica-silica attraction) contained in a rubber composition and less attractive to the less polar diene-based elastomers (less silica-elastomer attraction) in the rubber composition.

Therefore, creating an efficient dispersion of the highly polar hydrophilic precipitated silica within the diene-based elastomer-containing rubber composition can be difficult without extensive high shear mixing of the rubber composition. Such difficulty is well known to those having skill in such art.

In practice, in order to promote reinforcement of the diene-based elastomer in the rubber composition by the precipitated silica, a silica coupler is normally added to the rubber composition. The silica coupler contains a moiety (e.g. an alkoxysilane) reactive with the hydroxyl groups on the precipitated silica and another different moiety (e.g. a polysulfide) interactive with the diene-based elastomer(s) contained in the rubber composition. The reaction of such silica coupler with hydroxyl groups on the precipitated silica during the mixing of the rubber composition, therefore an in situ reaction within the rubber composition, reduces the content of the of hydroxyl groups on the silica with a portion of unreacted hydroxyl groups remaining, to thereby render the precipitated silica less polar in nature and therefore more dispersible within the rubber composition.

Sulfur with various combinations of sulfur cure accelerators may be used to cure the precipitated silica-containing, diene rubber based rubber composition where the accelerators are typically composed of a primary accelerator together with a more active secondary accelerator to aid in initiating and promoting the sulfur vulcanization. The rate of sulfur cure of the rubber composition promoted by the sulfur cure accelerators is important in a sense that it must be sufficient to promote curing of the rubber composition within a suitable period of time but must not be too rapid in order to avoid what is sometimes referred to as an unwanted "scorching", or "pre-curing" of the rubber composition.

Representative of primary sulfur cure accelerators are sulfenamide primary sulfur cure accelerators. Representative of such sulfenamide primary sulfur cure accelerators are, for example, N-cyclohexyl benzothiozole-2-sulfonamide, N-dicyclohexyl benzothiazole-2-sulfenamide and N-tert-butyl benzothiazole-2-sulfenamide.

However, such in situ modified precipitated silica retains a degree of its polarity sufficient to attract a portion of later added sulfur cure accelerators to thereby reduce availability of the sulfur cure accelerators and associated rate of cure promoted by the accelerators in the rubber composition. To counteract such reduction in rate of cure activity, a more active diphenylguanidine secondary accelerator is added together with the primary sulfenamide primary accelerator to thereby increase the reduced rate of cure of the rubber composition.

Alternatively, the polar hydrophilic precipitated silica may be pre-treated with a silica coupling agent prior to its introduction into the rubber composition to make it more hydrophobic, to thereby reduce its polarity, making it less polar in nature and to render it more compatible with and thereby more readily dispersible within the less polar diene-based elastomer-containing rubber composition.

It is envisioned that such pre-treatment of the precipitated silica prior to addition to the rubber composition instead of blending silica coupling agent with the precipitated silica within a rubber composition provides a more efficient reaction of the coupling agent with hydroxyl groups on the precipitated silica. Therefore a greater reduction of the concentration of hydroxyl groups on the precipitated silica is provided accompanied by a greater reduction in the polarity of the precipitated silica.

With the greater reduction in polarity of the pre-treated precipitated silica, less sulfur cure accelerator is thereby absorbed onto the pre-treated precipitated silica within the rubber composition during the rubber mixing process and more sulfur cure accelerator remains available for sulfur curing the rubber composition which ultimately promotes both a faster rate of sulfur curing of the rubber composition as well as an adverse increase in the sulfur cure density formation for the rubber composition. In one aspect, such increase of the sulfur cure activity may undesirably promote an excessively faster cure rate for the rubber composition at a lower temperature to an extent that the rubber may partially pre-sulfur cure during the mixing of the rubber composition and prior to a molding and intended curing of the rubber composition. Such undesirable pre-sulfur curing of the rubber composition during its mixing process is sometimes referred to as "scorching". Scorching of the rubber composition during mixing is generally undesirable as is known by those having skill in such art. The increase in sulfur cure density may adversely affect (e.g. reduce) the cured rubber's elongation to break and adversely reduce its tear resistance.

To reduce promotion of unwanted scorching (pre-sulfur curing) of the rubber. composition during its mixing and increase in sulfur crosslink density, it may be readily thought of to simply eliminate presence of the secondary accelerator (e.g. the diphenylguanidine). However, such elimination of the diphenylguanidine secondary accelerator may adversely cause a reduction of various cured rubber properties.

Accordingly, a challenge is presented to provide a sulfur vulcanization system comprising sulfur and sulfur cure accelerator(s), which includes a sulfenamide primary cure accelerator, where a rubber composition contains a silica, preferably a precipitated silica, pre-treated with a silica coupler (pre-treated prior to its addition to the rubber composition).

Therefore, it is desired to evaluate an inclusion of a crosslinking agent for a rubber composition comprising at least one diene-based elastomer and precipitated silica pre-treated with silica coupler where the sulfur cure package comprises sulfur and sulfenamide primary cure accelerator. Such crosslinking agent for this evaluation is 1,6-bis (N,N'-dibenzylthiocarbamyldithio)-hexane.

In the description of this invention, the terms "rubber", "elastomer" and "rubbery polymer" may be used interchangeably unless otherwise indicated. The terms "cured" and "vulcanized" may be used interchangeably unless otherwise indicated.

The term "phr" refers to parts by weight of an ingredient per 100 parts by weight of rubber in a rubber composition.

CN-A-103 289 143 describes a rubber composition in accordance with the preamble of claim 1.

EP-A-2 554 553 describes a rubber composition comprising diene-based elastomers, a reinforcing filler and a coupling agent.

### Summary and Practice of the Invention

The invention relates to a rubber composition in accordance with claim 1 and to a tire in accordance with claim 10.

Dependent claims refer to preferred embodiments of the invention.

In accordance with a preferred aspect of this invention, a rubber composition is provided comprising:
(A) 100 parts by weight of at least one conjugated diene based elastomer;
(B) a reinforcing filler comprising rubber reinforcing carbon black and precipitated silica, where said precipitated silica is a composite comprising a precipitated silica pre-treated with a silica coupling agent, wherein said coupling agent comprises:
   (1) bis(3-triethoxysilylpropyl) polysulfide having an average of from 2 to 4 connecting sulfur atoms in its polysulfidic bridge, or
   (2) an alkoxyorganomercaptosilane, and
(C) a sulfur curative comprising sulfur, 1,6-bis (N,N'-dibenzylthiocarbamyldithio)-hexane crosslinking agent and sulfenamide (primary) sulfur cure accelerator, exclusive of diphenyl guanidine (secondary) sulfur cure accelerator and which desirably exclude secondary sulfur cure accelerators.

Representative examples of sulfenamide sulfur cure accelerators comprise, for example, at least one of N-tert-butyl benzothiazole-2-sulfenamide, N-oxydiethylene benzothiazole-2-sulfenamide, N-cyclohexyl benzothiazole-2-sulfenamide and N-tert-benzothiazole-2-sulfenamide, preferably comprise N-cyclohexyl benzothiazole-2-sulfenamide or N-tert-butyl-2-benzothiazole sulfonamide, and more desirably N-cyclohexyl benzothiazole-2-sulfenamide, which desirably excludes secondary sulfur cure accelerators.

In one embodiment, the rubber composition does not contain (is exclusive of) other sulfur vulcanization accelerators, particularly secondary sulfur cure accelerators such as, for example, the aforesaid diphenyguanidine, as well as tetramethyl thiuram disulfide, tetramethyl thiruam monosulfide, zinc dimethyldithiocarbamate, tetraisobutyl thiruam disulfide, tetraisobutyl thiuram monosulfide, tetrabenzyl thiuram disulfide, zinc didibenzyldithiocarbamate and di-o-tolyguanidine.

In further accordance with this invention, a tire is provided containing a component comprising such rubber composition, particularly a sulfur cured rubber composition.

It is preferred that the rubber composition is exclusive of butyl type rubber, particularly copolymers of isobutylene with a minor content of diene hydrocarbon(s) such as for example isoprene and halogenated butyl rubber.

In practice, various conjugated diene-based elastomers may be used for the rubber composition such as, for example, polymers and copolymers of at least one of isoprene and 1,3-butadiene and of styrene copolymerized with at least one of isoprene and 1,3-butadiene.

Representative of such conjugated diene-based elastomers, for example, comprise at least one of cis 1,4-polyisoprene (natural and synthetic), cis 1,4-polybutadiene, styrene/butadiene copolymers (aqueous emulsion polymerization prepared and organic solvent solution polymerization prepared), medium vinyl polybutadiene having a vinyl 1,2-content in a range of 15 to 90 percent, isoprene/butadiene copolymers, styrene/isoprene/butadiene terpolymers.

Representative of functionalized elastomers are, for example, styrene/butadiene elastomers containing one or more functional groups comprising:
(A) an amine functional group reactive with hydroxyl groups on said precipitated silica;
(B) a siloxy functional group, including end chain siloxy groups, reactive with hydroxyl groups on said precipitated silica;
(C) a combination of amine and siloxy functional groups reactive with hydroxyl groups on said precipitated silica;
(D) a combination of thiol and siloxy (e.g. ethoxysilane) functional groups reactive with hydroxyl groups on said precipitated silica;
(E) a combination of imine and siloxy functional groups reactive with hydroxyl groups on said precipitated silica;
(F) a hydroxyl functional groups reactive with said precipitated silica.

For the functionalized elastomers, representative of amine functionalized SBR elastomers are, for example, in-chain functionalized SBR elastomers mentioned in US-B-6,936,669.

Representative of a combination of amino-siloxy functionalized SBR elastomers with one or more amino-siloxy groups connected to the elastomer is, for example, HPR355™ from JSR and amino-siloxy functionalized SBR elastomers mentioned in US-B-7,981,966.

Representative styrene/butadiene elastomers end functionalized with a silane-sulfide group are, for example, mentioned in US-B-8,217,103 and US-B-8,569,409.

Tin coupled elastomers may also be used, such as, for example, tin coupled organic solution polymerization prepared styrene/butadiene co-polymers, isoprene/butadiene copolymers, styrene/isoprene copolymers, polybutadiene and styrene/isoprene/butadiene terpolymers including the aforesaid functionalized styrene/butadiene elastomers.

Commonly employed synthetic amorphous silica, or siliceous pigments, used in rubber compounding applications can be used as the precipitated silica for this invention.

The precipitated silica aggregates preferably employed in this invention are typically obtained by the acidification of a soluble silicate, e.g., sodium silicate and may include co-precipitated silica and a minor amount of aluminum.

Such silicas might usually be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, (1938), as well as ASTM D5604 for precipitated silica.

The silica may also be typically characterized, for example, by having a dibutylphthalate (DBP) absorption value in a range of 50 to 400 cc/100g, and more usually 100 to 300 cc/100g (ASTM D2414).

Various commercially available precipitated silicas may be considered for use in this invention such as, only for example herein, and without limitation, silicas from PPG Industries under the Hi-Sil trademark with designations such as Hi-Sil 210 and Hi-Sil 243; silicas from Solvay as, for example, Zeosil 1165MP; silicas from Evonic with, for example, designations VN2 and VN3; as well as other grades of silica, particularly precipitated silicas, which can be used for elastomer reinforcement.

Various coupling agents may be used if desired to aid in coupling the precipitated silica (e.g. the precipitated silica containing hydroxyl groups on its surface) including, for example, coupling agents comprised of bis(3-triethoxysilylpropyl) polysulfide containing an average of from 2 to 4, alternately from 2 to 2.6 and alternately from 3.4 to 3.8, connecting sulfur atoms in its polysulfidic bridge, and comprised of alkoxyorganomercaptosilanes.

Representative examples of various alkoxyorganomercaptosilane silica couplers are, for example and not intended to be limiting, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane.

It is readily understood by those having skill in the art that the rubber composition would be compounded by methods generally known in the rubber compounding art, such as mixing the various sulfur-vulcanizable constituent rubbers with various commonly used additive materials including the aforesaid sulfur and N-cyclohexyl-2-benzothiazolesulfenamide curatives together with a sulfenamide sulfur cure accelerator.

Various processing additives may be used, where appropriate, such as for example, rubber processing oils, various resins including tackifying resins, pigments, plasticizers, fatty acids, zinc oxide, waxes, antioxidants and antiozonants, peptizing agents and reinforcing fillers materials such as, for example, the aforementioned rubber reinforcing carbon black and precipitated silica. As known to those skilled in the art, depending on the intended use of the sulfur vulcanizable and sulfur vulcanized material (rubbers), the additives mentioned above are selected where appropriate and commonly used in conventional amounts.

Typical amounts of tackifier resins, if used, may, for example, comprise 0.5 to 10 phr, usually 1 to 5 phr. Typical amounts of processing aids, if used, may comprise, for example from 1 to 50 phr. Such processing aids can include, for example and where appropriate, aromatic, naphthenic, and/or paraffinic processing oils. Typical amounts of antioxidants where used may comprise, for example, 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants, where used, may comprise for example 1 to 5 phr. Typical amounts of fatty acids, if used, which can include stearic acid and more commonly combinations of stearic acid with one or more of palmitic acid and oleic acid and may comprise, for example, from 0.5 to 3 phr. Typical amounts of zinc oxide may comprise, for example, from 1 to 10 phr. Typical amounts of waxes, such as for example microcrystalline waxes, where used, may comprise, for example, from 1 to 5 phr. Typical amounts of peptizers, where used, may comprise, for example, from 0.1 to 1 phr.

The presence and relative amounts of the above additives are not considered to be an aspect of the present invention, unless otherwise indicated herein.

The mixing of the rubber composition can be accomplished by methods known to those having skill in the rubber mixing art. For example, the ingredients are typically mixed in at least two stages, namely, at least one sequential non-productive mixing stage followed by a productive mix stage. The final curatives (sulfur and sulfenamide cure accelerator) are typically mixed in the final mixing stage which is conventionally called the "productive" mix stage in which the mixing typically occurs at a temperature, or ultimate temperature, lower than the mix temperature(s) than the preceding non-productive mix stage(s).

## Claims

1. A rubber composition comprising:
(A) 100 parts by weight of at least one conjugated diene based elastomer;
(B) a reinforcing filler comprising a combination of carbon black and silica, wherein said silica is a composite comprising a silica, preferably precipitated silica, pre-treated with a silica coupling agent, wherein said coupling agent comprises:
(1) bis(3-triethoxysilylpropyl) polysulfide having an average of from 2 to 4 connecting sulfur atoms in its polysulfidic bridge, or
(2) an alkoxyorganomercaptosilane, and
(C) a sulfur curative comprising sulfur and a sulfenamide sulfur cure accelerator, wherein the sulfur curative is exclusive of a diphenyl guanidine sulfur cure accelerator;
wherein said sulfenamide sulfur cure accelerator comprises at least one of N-tert-butyl benzothiazole-2-sulfenamide, N-oxydiethylene benzothiazole-2-sulfenamide, N-cyclohexyl benzothiazole-2-sulfenamide and N-tert-benzothiazole-2-sulfenamide;
**characterized in that** the sulfur curative further comprises a 1,6-bis (N,N'-dibenzylthiocarbamyldithio)-hexane crosslinking agent.

2. The rubber composition of claim 1 wherein the sulfenamide sulfur cure accelerator excludes a secondary sulfur cure accelerator.

3. The rubber composition of claim 1 or 2 wherein said sulfenamide sulfur cure accelerator comprises N-cyclohexyl benzothiazole-2-sulfenamide.

4. The rubber composition of at least one of the preceding claims wherein said silica is a composite comprising a precipitated silica pre-treated with a silica coupling agent comprising bis(3-triethoxysilylpropyl) polysulfide having an average of from 2 to 4 connecting sulfur atoms in its polysulfidic bridge.

5. The rubber composition of at least one of the previous claims wherein said silica is a composite comprising a precipitated silica pre-treated with a silica coupling agent comprising an alkoxyorganomercaptosilane.

6. The rubber composition of at least one of the previous claims wherein said conjugated diene-based elastomer comprises at least one of polymers and copolymers of at least one of isoprene and 1,3-butadiene and of styrene copolymerized with at least one of isoprene and 1,3-butadiene.

7. The rubber composition of at least one of the previous claims such as claim 6 wherein at least one of said elastomers is a functionalized styrene/butadiene elastomer containing one or more one or more functional groups comprising:
(A) an amine functional group reactive with hydroxyl groups on said precipitated silica;
(B) a siloxy functional group, including end chain siloxy groups, reactive with hydroxyl groups on said precipitated silica;
(C) a combination of amine and siloxy functional groups reactive with hydroxyl groups on said precipitated silica;
(D) a combination of thiol and siloxy functional groups reactive with hydroxyl groups on said precipitated silica;
(E) a combination of imine and siloxy functional groups reactive with hydroxyl groups on said precipitated silica; and
(F) hydroxyl functional groups reactive with said precipitated silica.

8. The rubber composition of at least one of the previous claims wherein at least one of said functionalized elastomers is tin coupled.

9. The rubber composition of at least one of the previous claims wherein the rubber composition is a sulfur cured rubber composition.

10. A tire having a component comprising the rubber composition of claim 9.

11. The tire of claim 10 wherein the component is a tread.

## Patentansprüche

1. Kautschukzusammensetzung, umfassend:
(A) 100 Gewichtsteile mindestens eines Elastomers auf Basis konjugierten Diens;
(B) einen Verstärkungsfüllstoff, umfassend eine Kombination von Carbon Black und Silika, wobei das Silika ein Verbundwerkstoff ist, der ein Silika umfasst, bevorzugt ausgefälltes Silika, das mit einem Silika-Kopplungsmittel vorbehandelt ist, wobei das Kopplungsmittel umfasst:
(1) Bis(3-Triethoxysilylpropyl)polysulfid, das einen Durchschnitt von 2 bis 4 verbindenden Schwefelatomen in seiner Polysulfidbrücke aufweist, oder
(2) ein Alkoxyorganomercaptosilan, und
(C) ein Schwefelvulkanisationsmittel, umfassend Schwefel und einen Sulfenamid-Schwefelvulkanisationsbeschleuniger, wobei das Schwefelvulkanisationsmittel unter Ausschluss eines Diphenylguanidin-Schwefelvulkanisationsbeschleunigers ist;
wobei der Sulfenamid-Schwefelvulkanisationsbeschleuniger mindestens eines umfasst von N-tert-Butylbenzothiazol-2-sulfenamid, N-Oxydiethylenbenzothiazol-2-sulfenamid, N-Cyclohexylbenzothiazol-2-sulfenamid und N-tert-Benzothiazol-2-sulfenamid;
**dadurch gekennzeichnet, dass** das Schwefelvulkanisationsmittel weiter ein 1,6-bis(N,N'-Dibenzylthiocarbamyldithio)-hexan-Vernetzungsmittel umfasst.

2. Kautschukzusammensetzung nach Anspruch 1, wobei der Sulfenamid-Schwefelvulkanisationsbeschleuniger einen sekundären Schwefelvulkanisationsbeschleuniger ausschließt.

3. Kautschukzusammensetzung nach Anspruch 1 oder 2, wobei der Sulfenamid-Schwefelvulkanisationsbeschleuniger N-Cyclohexylbenzothiazol-2-sulfenamid umfasst.

4. Kautschukzusammensetzung nach mindestens einem der vorhergehenden Ansprüche, wobei das Silika ein Verbundwerkstoff ist, der ein ausgefälltes Silika umfasst, das mit einem Silika-Kopplungsmittel, das Bis(3-Triethoxysilylpropyl)polysulfid mit einem Durchschnitt von 2 bis 4 verbindenden Schwefelatomen in seiner Polysulfidbrücke umfasst, vorbehandelt ist.

5. Kautschukzusammensetzung nach mindestens einem der vorhergehenden Ansprüche, wobei das Silika ein Verbundwerkstoff ist, der ein ausgefälltes Silika umfasst, das mit einem Silika-Kopplungsmittel, das ein Alkoxyorganomercaptosilan umfasst, vorbehandelt ist.

6. Kautschukzusammensetzung nach mindestens einem der vorhergehenden Ansprüche, wobei das Elastomer auf Basis konjugierten Diens mindestens eines von Polymeren und Copolymeren von mindestens einem von Isopren und 1,3-Butadien und von Styrol, copolymerisiert mit mindestens einem von Isopren und 1,3-Butadien, umfasst.

7. Kautschukzusammensetzung nach mindestens einem der vorhergehenden Ansprüche, wie etwa Anspruch 6, wobei mindestens eines der Elastomere ein funktionalisiertes Styrol-Butadien-Elastomer ist, das eine oder mehrere funktionelle Gruppen enthält, umfassend:
(A) eine funktionelle Amingruppe, die mit Hydroxylgruppen auf dem ausgefällten Silika reaktiv ist;
(B) eine funktionelle Siloxygruppe, einschließlich Endketten-Siloxygruppen, die mit Hydroxylgruppen auf dem ausgefällten Silika reaktiv ist;
(C) eine Kombination von funktionellen Amin- und Siloxygruppen, die mit Hydroxylgruppen auf dem ausgefällten Silika reaktiv sind;
(D) eine Kombination von funktionellen Thiol- und Siloxygruppen, die mit Hydroxylgruppen auf dem ausgefällten Silika reaktiv sind;
(E) eine Kombination von funktionellen Imin- und Siloxygruppen, die mit Hydroxylgruppen auf dem ausgefällten Silika reaktiv sind; und
(F) funktionelle Hydroxylgruppen, die mit dem ausgefällten Silika reaktiv sind.

8. Kautschukzusammensetzung nach mindestens einem der vorhergehenden Ansprüche, wobei mindestens eines der funktionalisierten Elastomere zinngekoppelt ist.

9. Kautschukzusammensetzung nach mindestens einem der vorhergehenden Ansprüche, wobei die Kautschukzusammensetzung eine schwefelvulkanisierte Kautschukzusammensetzung ist.

10. Reifen, der ein Bauteil aufweist, das die Kautschukzusammensetzung nach Anspruch 9 umfasst.

11. Reifen nach Anspruch 10, wobei das Bauteil eine Lauffläche ist.

## Revendications

1. Composition de caoutchouc comprenant :
(A) 100 parties en poids d'au moins un élastomère à base de diène conjugué ;
(B) une matière de charge pour le renforcement comprenant une combinaison de noir de carbone et de silice, dans laquelle ladite silice est un composite comprenant une silice, de préférence une silice précipitée prétraitée avec un agent de couplage de silice, dans lequel ledit agent de couplage comprend :
(1) un bis (3-triéthoxysilylpropyl) polysulfure possédant en moyenne de 2 à 4 atomes de soufre de liaison dans son pont polysulfure ; ou
(2) un alcoxyorganomercaptosilane ; et
(C) un agent de vulcanisation à base de soufre comprenant du soufre et un accélérateur de la vulcanisation au soufre du type du sulfénamide, dans laquelle l'agent de vulcanisation à base de soufre ne contient pas un accélérateur de la vulcanisation au soufre du type de la diphénylguanidine ;
dans laquelle ledit accélérateur de la vulcanisation au soufre du type du sulfénamide comprend au moins un sulfénamide choisi parmi le N-tert-butyl benzothiazol-2-sulfénamide, le N-oxydiéthylène benzothiazol-2-sulfénamide, le N-cyclohexyl benzothiazol-2-sulfénamide, et le N-tert-benzothiazol-2-sulfénamide ;
**caractérisée en ce que** l'agent de vulcanisation à base de soufre comprend, à titre d'agent de réticulation, le 1,6-bis (N,N'-dibenzylthiocarbamyldithio)-hexane.

2. Composition de caoutchouc selon la revendication 1, dans laquelle l'accélérateur de la vulcanisation au soufre du type du sulfénamide ne contient pas un accélérateur secondaire de la vulcanisation au soufre.

3. Composition de caoutchouc selon la revendication 1 ou 2, dans laquelle ledit accélérateur de la vulcanisation au soufre du type du sulfénamide comprend le N-cyclohexyl benzothiazol-2-sulfénamide.

4. Composition de caoutchouc selon au moins une des revendications précédentes, dans laquelle ladite silice est un composite comprenant une silice précipitée prétraitée avec un agent de couplage de silice comprenant un bis (3-triéthoxysilylpropyl) polysulfure possédant une moyenne de 2 à 4 atomes de soufre de liaison dans son pont polysulfure.

5. Composition de caoutchouc selon au moins une des revendications précédentes, dans laquelle ladite silice est un composite comprenant une silice précipitée prétraitée avec un agent de couplage de silice comprenant un alcoxyorganomercaptosilane.

6. Composition de caoutchouc selon au moins une des revendications précédentes, dans laquelle ledit élastomère à base de diène conjugué comprend au moins un élastomère choisi parmi des polymères et des copolymères d'au moins un polymère choisi parmi l'isoprène et le 1,3-butadiène et du styrène copolymérisé avec au moins au moins un polymère choisi parmi l'isoprène et le 1,3-butadiène.

7. Composition de caoutchouc selon au moins une des revendications précédentes, telle que la revendication 6, dans laquelle au moins un desdits élastomères est un élastomère fonctionnalisé de styrène/butadiène contenant un ou plusieurs groupes fonctionnels comprenant :
(A) un groupe fonctionnel de type amine apte à réagir avec des groupes hydroxyle sur ladite silice précipitée ;
(B) un groupe fonctionnel de type siloxy, y compris des groupes siloxy à chaîne terminale, apte à réagir avec des groupes hydroxyle sur ladite silice précipitée ;
(C) une combinaison de groupes fonctionnels de type amine et de type siloxy aptes à réagir avec des groupes hydroxyle sur ladite silice précipitée ;
(D) une combinaison de groupes fonctionnels de type thiol et de type siloxy aptes à réagir avec des groupes hydroxyle sur ladite silice précipitée ;
(E) une combinaison de groupes fonctionnels de type imine et de type siloxy aptes à réagir avec des groupes hydroxyle sur ladite silice précipitée ; et
(F) des groupes fonctionnels de type hydroxyle aptes à réagir avec ladite silice précipitée.

8. Composition de caoutchouc selon au moins une des revendications précédentes, dans laquelle au moins un desdits élastomères fonctionnalisés est couplé à l'étain.

9. Composition de caoutchouc selon au moins une des revendications précédentes, dans laquelle la composition de caoutchouc est une composition de caoutchouc vulcanisée au soufre.

10. Bandage pneumatique possédant un composant comprenant la composition de caoutchouc selon la revendication 9.

11. Bandage pneumatique selon la revendication 10, dans lequel le composant est une bande de roulement.
